# EUROPEAN PATENT APPLICATION

(11) **EP 1 630 799 A1**
(43) Date of publication of application: **01.03.2006**
(21) Application number: 05254104.2
(22) Date of filing: 05.07.2005
(51) Int. Cl.: G11B 7/10, G11B 7/08, G11B 7/12, G11B 7/13, G11B 7/135

(54) **Light-emission and reception module for optical pickup and optical pickup**

(30) Priority: 27.08.2004 JP 2004248193
(71) Applicant: Mitsumi Electric Co., Ltd., Tama-Shi, Tokyo (JP)
(72) Inventor: Ishii, Tsuyuoshi, Tama-shi Tokyo (JP); Yamada, Tsukasa, Tama-shi Tokyo (JP); Tokahashi, Soumei, Tama-shi Tokyo (JP); Yoshizawa, Akihiro, Tama-shi Tokyo (JP)
(74) Representative: Haley, Stephen

(57) **Abstract**

In a light-emission and reception module for use in an optical pickup, a polarization beam splitter (330) transmits an outgoing laser beam from the laser-emitting element and reflects, as a reflected laser beam, a return laser beam reflected by the optical disc in a direction perpendicular to the outgoing laser beam. The laser-emitting element (310), the polarization beam splitter (330), and the photo-detecting element (360) are mounted on the holder (390). The reflected laser beam is perpendicular to a reception surface of the photo-detecting element (360).

## Description

This application claims priority to prior Japanese patent application JP **2004-248193,** the disclosure of which is incorporated herein by reference.

The present invention relates to an optical pickup used in an optical disc drive and, in particular, to a light-emission and reception module for emitting an outgoing laser beam to an optical disc and receiving the laser beam reflected on the optical disc.

An optical disc drive is a device for reading/writing information from/into an optical disc (CD, CD-ROM, CD-R/RW, DVD-ROM, DVD-RAM, DVD±R/±R DL/±RW, Blu-lay, HD DVD, or the like). In order to achieve reading/writing the information from/into the optical disc, the optical disc drive of this type comprises an optical pickup for irradiating the optical disc with a laser beam and for detecting its reflected beam.

As well known in the art, in DVD apparatuses, there is one in which a particular optical pickup is mounted in order to enable to record/reproduce data in/from both of the DVD and the CD. The particular optical pickup of the type is for carrying out recording or reproducing by selectively using two kinds of laser beams, that is, a laser beam having short wavelength (wavelength band of 650 nm) for the DVD and a laser beam having a long wavelength (wavelength band of 780 nm) for the CD. The particular optical pickup is called a two-wavelength handling optical pickup.

As one of the two-wavelength handling optical pickups of the type, there is a unit which comprises a first laser diode (LD) for emitting the laser beam (a first laser beam) having the short wavelength for the DVD and a second laser diode (LD) for emitting the laser beam (a second laser beam) having the long wavelength for the CD. Such a two-wavelength handling optical pickup is disclosed in Japanese Unexamined Patent Publication No. 2003-272220 or JP-A 2003-272220.

However if the first laser diode and the second laser diode are formed as separate parts from each other, it is inconvenient that the two-wavelength handling optical pickup comprises a lot of parts and is large-scale. In order to cope with such problems, a new laser diode comprising, as one part (one chip), the first laser diode and the second laser diode is developed and proposed. Such a new laser diode is called a one-chip type laser diode. For example, such a one-chip type laser diode is disclosed in Japanese Unexamined Patent Publication Tokkai No. 11-149652 or JP-A 11-149652. It is possible to miniaturize the two-wavelength handling optical pickup by using the one-chip type laser diode.

However, since the one-chip type laser diode has a first emission point for emitting the first laser beam and a second emission point for the second laser beam that are apart from each other by a predetermined distance of, for example, 100µm, the first laser beam and the second laser beam are emitted in parallel with they apart from each other by the predetermined distance. Accordingly, various problems can arise when one of two laser beams apart from each other is irradiated on the optical disc. For example, when one of the first and the second laser beams is designed to pass through the center of the objective lens, the other of the first and the second laser beams passes through a location deviated from the center of the objective lens and therefore is not optimally focussed. Thus, accuracy is reduced. Further, because the first and the second laser beam reflected the optical disc are also deviated in location from each other. photo-detecting elements are necessary for the first and the second reflected beams, respectively. It is therefore preferable to guide the first laser beam and the second laser beam to the same optical axis by using any optical axis conforming means.

A two-wavelength laser module solving such a problem is proposed, for example, in Japanese Unexamined Patent Publication No. 2001-284740 or JP-A 2001-284740. The proposed two-wavelength laser module comprises a first laser-emitting element for emitting a first laser beam having a first wavelength, a second laser-emitting element for emitting a second laser beam having a second wavelength different from the first wavelength, and optical axis conforming means for receiving one of the first laser beam and the second laser beam to emit a laser beam on the same optical axis. In the two-wavelength laser module, the first laser source, the second laser source, and the optical axis conforming means are mounted in a package.

Furthermore, in the above-mentioned one-chip type laser diode, when the two laser beams apart from each other are irradiated on the optical disc, return beams reflected thereon (disc's reflected beams) are also reflected (returned) with optical axes of them deviated from each other. Accordingly, in this state as it is, it is impossible to receive the disc's reflected beams at one reception position in a photo-detecting element.

An optical pickup solving this problem is also proposed, for example, in Japanese Unexamined Patent Publication No. 2002-288870 or JP-A 2002-288870. The proposed optical pickup comprises a two-wavelength package laser diode, an optical system, and an optical axis combining element. The two-wavelength package laser diode emits first and second laser beams, which have first and second wavelengths different from each other, in parallel from first and second emission points apart from each other by a predetermined distance, respectively. The optical system is for guiding the first and the second laser beams to an optical disc and is for transmitting first and second return beams having deviated optical axes incident from the optical disc. The optical axis combining element guides the first and the second return beams transmitted through the optical system to the photo-detecting element so that the deviated optical axes are conformed at one reception position of the photo-detecting element.

At any rate, the optical disc drive of the type described develops a tendency to a thin type (a slim type or a ultra-slim type) so as to have a low height size. As a result, it is necessary to thin and to miniaturize an optical pickup.

In general, an optical pickup comprises a laser-emitting element for emitting an outgoing laser beam, a photo-detecting element, an optical system for guiding the emitted laser beam to an optical disc and for guiding its reflected beam to the photo-detecting element, and an optical base on which the laser-emitting element, the photo-detecting element, and the optical system are mounted.

However, it becomes increasingly difficult to dispose and assemble the laser-emitting element, the photo-detecting element, and the optical system, that is, many optical components onto the optical base which is thinned and miniaturized mentioned above. Therefore, it is necessary to intent or to integrate the laser-emitting element, the photo-detecting element, and the optical system with one another so as to reduce the number of the optical components.

As one suited to the need mentioned above, a hologram unit in which a laser-emitting element, a photo-detecting element, and an optical system are integrated is, for example, disclosed in Japanese Unexamined Patent Publication Tokkai No. 5-274713 or JP-A 5-274713. The hologram unit comprises a hologram element. The laser-emitting element and the photo-detecting element are mounted in line on a plate surface of a board. The hologram element transmits therein a laser beam from the laser-emitting element, and diffracts a laser beam reflected by an optical disc irradiated by the laser beam from the laser-emitting element so that the reflection beam is diffracted in different direction from the laser beam from the laser-emitting element. The hologram element is mounted above the laser-emitting element and the photo-detecting element in the thickness direction of the board

Furthermore, a hologram unit corresponding to both the CD and the DVD is disclosed in Japanese Unexamined Patent Publication No. 2000-348367 or JP-A 2000-348367. In the hologram unit, a laser-emitting element, a photo-detecting element, an optical axis conforming element, a hologram element are integrated. The laser-emitting element and the photo-detecting element are mounted in line on a plate surface of a board. The hologram element transmits therein a laser beam from the laser-emitting element, and diffracts a laser beam reflected by an optical disc irradiated by the laser beam from the laser-emitting element so that the reflection beam is diffracted in different direction from the laser beam from the laser-emitting element. The board is mounted on a bottom inside surface of a package in which an upper portion thereof is opened. The hologram element and the optical axis conforming element are mounted above the laser-emitting element and the photo-detecting element in the thickness direction of the board.

However, since the hologram unit uses the hologram lens and the prism both of which are expensive, the optical pickup is risen in cost.

Furthermore, since the hologram element is disposed above the laser-emitting element and the photo-detecting element in the thickness direction of the board in the hologram unit as mentioned above, it is stymied to thin the optical pickup. In the two-wavelength handling optical pickup, the optical axis conforming element is also presented above the laser-emitting element and the photo-detecting element, the disturbance is considerable.

It is therefore an object of the present invention to provide a light-emission and reception module capable of manufacturing at more low cost than the hologram unit and contributing to thin a optical pickup.

It is another object of the present invention to provide an optical pickup of slim type capable of manufacturing at low cost

On describing the gist of the present invention, it is possible to be understood that a light-emission and reception module for use in an optical pickup. The light-emission and reception module comprises a laser-emitting element for emitting an outgoing laser beam to irradiate an optical disc with the outgoing laser beam, a polarization beam splitter for transmitting the outgoing laser beam and for reflecting, as a reflected laser beam, a return laser beam reflected by the optical disc in a direction perpendicular to the outgoing laser beam, a photo-detecting element for photo-detecting the reflected laser beam, and a holder having a plate shape provided with first and second plate surfaces opposed to each other. The laser-emitting element, the polarization beam splitter, and the photo-detecting element are mounted on the holder so that the reflected laser beam is perpendicular to a reception surface of the photo-detecting element.

On describing the gist of the present invention, it is possible to be understood that an optical pickup comprising a light-emission and reception module and an optical base having a plate shape provided with first and second base plate surfaces opposed to each other. The light-emission and reception module comprises a laser-emitting element for emitting an outgoing laser beam to irradiate an optical disc with the outgoing laser beam, a polarization beam splitter for transmitting the outgoing laser beam and for reflecting, as a reflected laser beam, a return laser beam reflected by the optical disc in a direction perpendicular to the outgoing laser beam, a photo-detecting element for photo-detecting the reflected laser beam, and a holder for mounting thereon the laser-emitting element, the polarization beam splitter, and the photo-detecting element. The laser-emitting element, the polarization beam splitter, and the photo-detecting element are mounted on the holder so that the reflected laser beam is perpendicular to a reception surface of the photo-detecting element. The light-emission and reception module is mounted on the optical base so that an optical axis of the return laser beam is coincident with an incident optical axis of the polarization beam splitter.

Other objects and features of the present invention will become clear as the description proceeds.
Fig. 1 is a perspective view of an optical pickup including a light-emission and reception module according to a first embodiment of the present invention seen from a top surface side;
Fig. 2 is a perspective view of the optical pickup shown in Fig. 1 seen from a bottom surface side;
Fig. 3 is a perspective view showing the light-emission and reception module shown in Figs. 1 and 2 seen from a top surface side;
Fig. 4 is a perspective view showing the light-emission and reception module shown in Figs. 1 and 2 seen from a bottom surface side;
Fig. 5 is a perspective view for illustrating the light-emission and reception module shown in Figs. 1 and 2 seen from a top surface side;
Fig. 6 is a perspective view for illustrating a light-emission and reception module according to a second embodiment of the present invention seen from a top surface side;
Fig. 7 is a perspective view of a light-emission and reception module according to a third embodiment of the present invention seen from a top surface side; and
Fig. 8 is a perspective view of a light-emission and reception module according to a fourth embodiment of the present invention seen from a top surface side.

A light-emission and reception module according to the present invention is used in an optical pickup. The light-emission and reception module comprises a laser-emitting element, a polarization beam splitter, a photo-detecting element, and a holder. The polarization beam splitter transmits an outgoing laser beam emitted by the laser-emitting element and reflects, as a reflected laser beam, a return laser beam reflected by the optical disc in a direction perpendicular to the outgoing laser beam. The laser-emitting element, the polarization beam splitter, and the photo-detecting element are mounted on the holder so that the reflected laser beam is perpendicular to a reception surface of the photo-detecting element. The outgoing laser beam and the reflected laser beam may be parallel to the first and the second plate surfaces of the holder.

Since the light-emission and reception module does not use the hologram element and has very simple structure, the module is provided at low cost more than the hologram unit and contributes to thin the optical pickup.

Furthermore, since the laser-emitting element, the polarization beam splitter, and the photo-detecting element are integrally mounted on the holder, it is unnecessary to axis-adjust a first optical path from the laser-emitting element to the polarization beam splitter and a second optical path from the polarization beam splitter to the photo-detecting element. That is, even if an optical axis of an optical path from the light-emission and reception module to the objective lens is axis-adjusted, it is unnecessary at all to axis-adjust axes of other optical paths in the optical pickup. Thus, an assembling process of the optical pickup is facilitated.

Still further, an optical pickup according to the present invention comprises the light-emission and reception module mentioned above, an objective lens for focusing as a focused laser beam the outgoing laser beam on the optical disc, a rising mirror, and an optical base. The optical base has a plate shape provided with first and second base plate surfaces. The rising mirror is disposed between the light-emission and reception module and the objective lens and turns an incoming laser beam by 90 degrees. The light-emission and reception module is mounted on the optical base so that an optical axis of the return laser beam is coincident with an incident optical axis of the polarization beam splitter. The first and the second holder plate surfaces of the holder may be parallel to the first and the second base plate surfaces of the optical base. Also, the objective lens and the rising mirror may be mounted on the optical base so that the focused laser beam is perpendicular to the first and the second base plate surfaces of the optical base.

Thus, the optical pickup is slim.

### First Embodiment

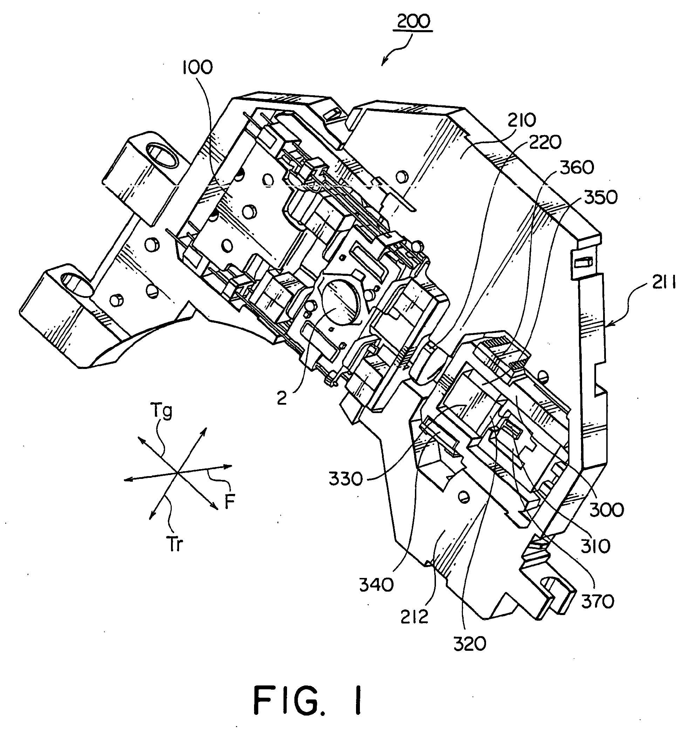

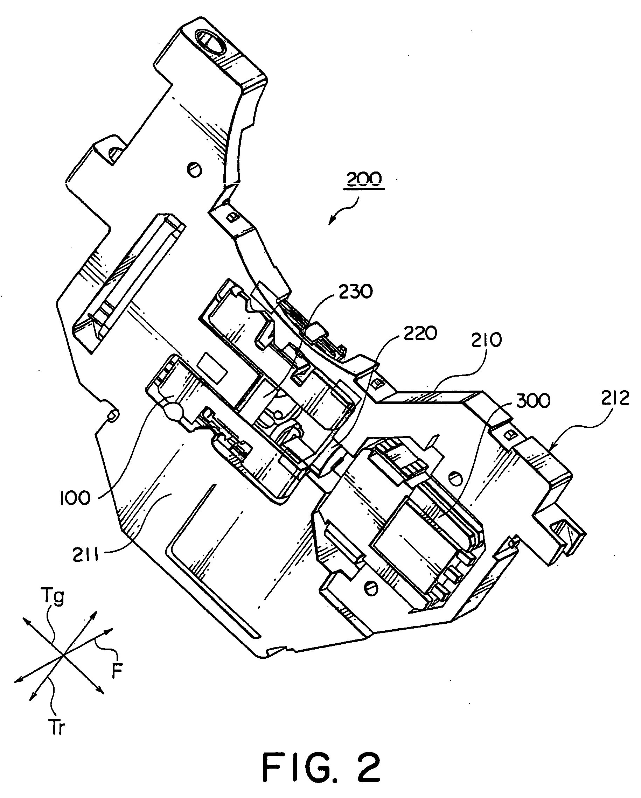

Figs. 1 and 2 shows an optical pickup 200 of a two-wavelength handling type including a light-emission and reception module 300 according to a first embodiment of the present invention. Fig. 1 is a perspective view of the optical pickup 200 seen from a top surface side. Fig. 2 is a perspective view of the optical pickup 200 seen from a bottom surface side. The illustrated optical pickup 200 is a two-wavelength handling type.

Referring to Figs. 1 and 2, the optical pickup 200 comprises an optical base 210 on which the objective lens driving device 100 is mounted. The optical base 210 is movably mounted to guide bars (not shown) along a radial direction (the tracking direction Tr) of an optical disc loaded in an optical disc drive. In the optical base 210, a laser-emitting element, a photo-detecting element, and a predetermined optical system are mounted in the manner which will later be described. In the optical pickup 200, an outgoing laser beam from the laser-emitting element is irradiated on an optical disc through the objective lens 2 and its reflected beam is guided to the photo-detecting element.

The illustrated optical pickup 200 comprises a light-emission and reception module 300 mounted on the optical base 210 The light-emission and reception module 300 comprises a laser-emitting element 310, an optical axis correcting element 320, a polarization beam splitter 330, a front monitor 340, a sensor lens 350, and the photo-detecting element 360. The light-emission and reception module 300 will be subsequently described in detail.

The first laser-emitting element is a laser-emitting element for emitting the first laser beam having, as a first wavelength, a wavelength of 650 nm for a DVD. The second laser-emitting element is a laser-emitting element for emitting the second laser beam having, as a second wavelength, a wavelength of 780 nm for a CD.

Between the light-emission and reception module 300 and the objective lens driving device 100, a collimator lens 220 is mounted in the optical base 210. Under the objective lens 2, a rising mirror (total reflection mirror) 230 is attached to the optical base 210.

In the objective lens holder 1, the tilting coils, the focusing coils 3, and the tracking coils 5 are wound in the manner which will later be described. By suitably controlling currents flowing through these coils, the objective lens holder 1 tilts in the tracking direction Tr (rotates around an optical axis in parallel to the tangential direction Tg), shifts in the tracking direction Tr, or shifts in the focusing direction F on the basis of relationships between the currents and magnetic fields produced by the yoke 15 and the magnets 16.

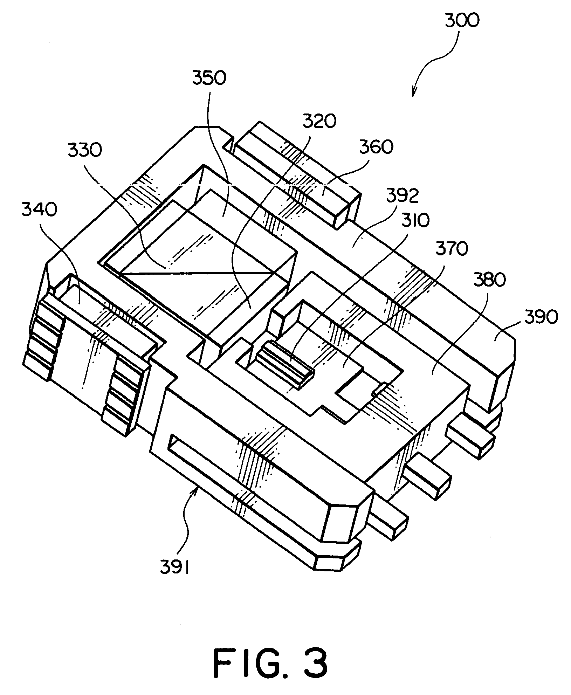

Now, the description will proceed to operation of the two-wavelength handling optical pickup 200 illustrated in Figs. 2 and 3. First, the description will be made as regards operation in a case where the DVD is used as the optical disc. Subsequently, the description will later be made as regards operation in a case where the CD is used as the optical disc.

When the optical disc is the DVD, only the first laser-emitting element is put into an active state while the second laser-emitting element is put into an inactive state. Accordingly, only the first laser-emitting element emits the first laser beam.

Emitted from the first laser-emitting element for the DVD, the first laser beam as the outgoing laser beam passes through the optical axis correcting element 320 at which the optical axis of the first laser beam is corrected. The corrected first laser beam enters the polarization beam splitter 330. Almost of the corrected first laser beam transmits through the polarization beam splitter 330 while a part of the corrected first laser beam is, as a partially reflected laser beam, reflected by the polarization beam splitter 330. Reflected by the polarization beam splitter 330, the partially reflected laser beam is monitored by the front monitor 340. Transmitted through the polarization beam splitter 330, the laser beam is collimated by the collimator lens 220 into a collimated beam which enters in the objective lens 2 through the total reflection mirror 230. Transmitted through the objective lens 2, the laser beam is converged therein and is irradiated (concentrated) on a recording surface of the DVD as the optical disc.

In the manner which is well known in the art, the two-wavelength handling optical pickup is operable at a writing mode or a reproducing mode. When the two-wavelength handling optical pickup operates at the writing mode, operation thereof comes to end in the above-description. On the other hand, when the two-wavelength handling optical pickup operates at the reproducing mode, the following operation proceeds.

Reflected from the recording surface of the optical disc (DVD), a first return beam passes through the objective lens 2, is reflected by the total reflection mirror 230, and transmits through the collimator lens 220 to obtain a converged beam. The converged beam is reflected by the polarization beam splitter 330, transmits the sensor lens 350, and then is concentrated (received) in the photo-detecting element 360.

Subsequently, when the optical disc is the CD, only the second laser-emitting element is an active state while the first laser-emitting element is an inactive state. Accordingly, only the second laser-emitting element emits the second laser beam.

Emitted from the second laser-emitting element for the CD, the second laser beam as the out going laser beam passes through the optical axis correcting element 320 at which the optical axis of the second laser beam is corrected. Operation after this is similar to the above-mentioned case where the optical disc is the DVD. Specifically, the corrected second laser beam enters the polarization beam splitter 330. Almost of the corrected second laser beam transmits through the polarization beam splitter 330 while a part of the corrected second laser beam is, as a partially reflected laser beam, reflected by the polarization beam splitter 330. Reflected by the polarization beam splitter 330, the partially reflected laser beam is monitored by the front monitor 340. Transmitted through the polarization beam splitter 330, the laser beam is collimated by the collimator lens 220 into a collimated beam which enters the objective lens 2 through the total reflection mirror 230. Transmitted through the objective lens 2, the laser beam is converged therein and is irradiated (concentrated) on a recording surface of the CD as the optical disc.

Reflected from the recording surface of the optical disc (CD), a second return beam passes through the objective lens 2, is reflected by the total reflection mirror 230, and transmits through the collimator lens 220 to obtain a converged beam. The converged beam is reflected by the polarization beam splitter 330, transmits the sensor lens 350, and then is concentrated (received) in the photo-detecting element 360.

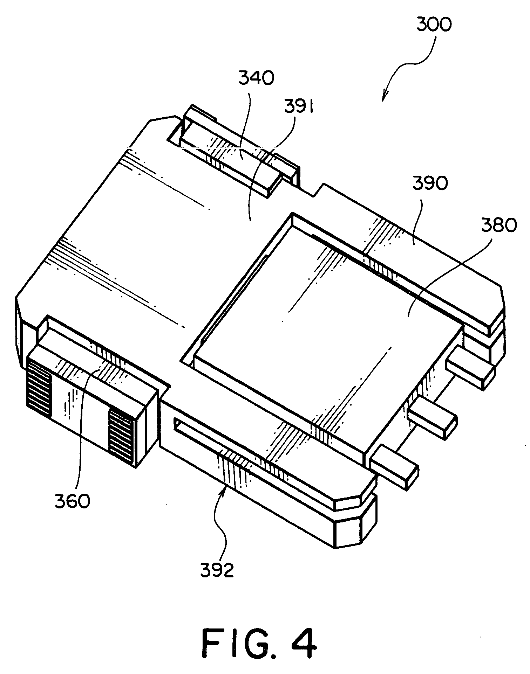

Referring to Figs. 3 to 5, the light-emission and reception module 300 according to a first embodiment of the present invention comprises a laser-emitting element 310, a polarization beam splitter 330, a photo-detecting element 360, and an optical axis conforming element 320. The laser-emitting element 310 emits an outgoing laser beam to irradiate an optical disc with the outgoing laser beam. The laser-emitting element 310 is a two-wavelength handling type. The polarization beam splitter 330 transmits the outgoing laser beam emitted by the laser-emitting element 310 and reflects, as a reflected laser beam, a return laser beam reflected by the optical disc in a direction perpendicular to the outgoing laser beam. The photo-detecting element 360 photo-detects the reflected laser beam from the polarization beam splitter 330. The optical axis conforming element 320 conforms each optical axis of first and second laser beams as the outgoing laser beam from the laser-emitting element 310 to each other. The light-emission and reception module 300 further comprises a front monitor 340 monitoring a partially reflected laser beam which is partially reflected by the polarization beam splitter 330 and a sensor lens 350 focusing the reflected laser beam on the photo-detecting element 360. These optical components are mounted on a holder 390.

The holder 390 has a plate shape and is provided with first and second holder plate surfaces 391 and 392. The laser-emitting element 310, the polarization beam splitter 330, and the photo-detecting element 360 are mounted on the holder 390 so that the reflected laser beam is perpendicular to a reception surface of the photo-detecting element 360. Particularly, the outgoing laser beam and the reflected laser beam are parallel to the first and the second holder plate surfaces 391 and 392 of the holder 390.
Consequently, the laser-emitting element 310, the polarization beam splitter 330, and the photo-detecting element 360 are not superposed upon each other in a thickness direction of the holder 390. Further, the laser-emitting element 310, the polarization beam splitter 330, the photo-detecting element 360, the optical axis conforming element 320, the front monitor 340, and the sensor lens 350 are disposed between the first and the second plate surface 391 and 392 of the holder 390. Thus, the light-emission and reception module 300 is slim.

As shown in Figs. 1 and 2, the optical pickup 200 comprise the light-emission and reception module 300, the objective lens driving device 100 including the objective lens 2, the rising mirror (total reflection mirror) 230, the collimator lens 220, and the optical base 210. The optical base 210 has first and second base plate surfaces 211 and 212. The light-emission and reception module 300 is mounted on the optical base 210 so that an optical axis of the return laser beam is coincident with an incident optical axis of the polarization beam splitter 330. Particularly, the first and the second holder plate surfaces 391 and 392 of the holder 390 are parallel to the first and the second base plate surfaces 211and 212 of the optical base 210. The rising mirror being disposed between the light-emission and reception module 300 and the objective lens 2 and turns an incoming laser beam by 90 degrees. The objective lens 2 and the rising mirror 230 are mounted on the optical base 210 so that the focused laser beam is perpendicular to the first and the second base plate surfaces 211and 212 of the optical base 210. The light-emission and reception module 300, the objective lens 2, the rising mirror 230, and the collimator lens 220 are disposed between the first and the second base plate surfaces 211and 212 of the optical base 210. Consequently, the optical pickup is slim.

Return to Figs. 3 to 5, the laser-emitting element 310 is mounted on a metallic frame 370. The metallic frame 370 is mounted on a resin frame 380 made of resin. The resin frame 380 is mounted on the holder 390. That is, the laser-emitting element 310 is mounted on the holder 390 through the metallic frame 370 and the resin frame 380.

The metallic frame 370 and the resin frame 380 have standardized size and shape, respectively. Generally, that kind of a laser-emitting element integrally attached to standardized frame member is called a "frame laser" and has been released as a multipurpose product applicable to various optical pickups. Therefore, the laser-emitting element 310 integrated with the metallic frame 370 and the resin frame 380 is also a type of the frame laser. Further, the frame laser is low-profile more than other multipurpose product called as a "can-package". In the can-package, a laser-emitting element is bonded to a metallic frame and resin-molded. The laser-emitting element resin-molded on the metallic frame is partially covered with a metallic cap.

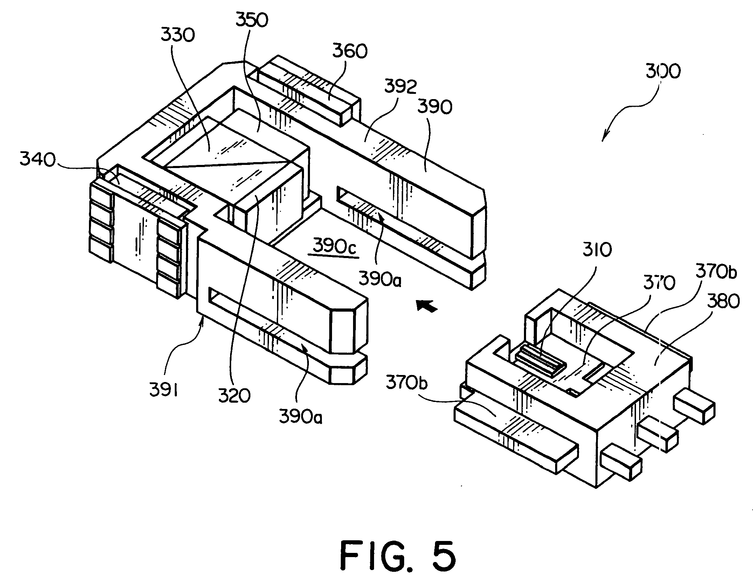

On the other hand, the holder 390 has suitable size and shape for the frame laser as the multipurpose product. That is, the holder 390 has a space 390c containing the frame laser structured by laser-emitting element 310, the metallic frame 370, and the resin frame 380 and a pair of slits 390a containing a pair of end portions 370b of the metallic frame 370, as shown in Fig. 5. The frame laser is press-fitted into the holder 390 in a direction shown by an arrow in Fig. 5 and is fixed at the predetermined position. The frame laser may be inserted into and fixed by adhesive on the holder 390.

Now, an assembling process of the optical pickup will be described.

The light-emission and reception module 300 is mounted on the optical base 210 before the objective lens driving device 100 is mounted on the optical base 210. A mounting process of the objective lens driving device 100 on the optical base 210 and an optical adjustment of the objective lens driving device 100 will be omitted in description.

The light-emission and reception module 300, the collimator lens 220, and the rising mirror 230 are mounted on the optical base 210. After an optical axis of a forward optical path from the light-emission and reception module 300 via the collimator lens 220 to the rising mirror 230 is adjusted, the light-emission and reception module 300, the collimator lens 220, and the rising mirror 230 are fixed on the optical base 210 by adhesive, respectively.

The optical axis of the forward optical path from the light-emission and reception module 300 via the collimator lens 220 to the rising mirror 230 is adjusted as follows.

An outgoing laser beam is forwardly emitted from the laser emitting element 310 of the light-emission and reception module 300 to the collimator lens 220. The outgoing laser beam transmitted through the collimator lens 220 is received by a light-reception monitor used for optical-adjustment not shown via the rising mirror 230. In response to monitor result, a distance between the light-emission and reception module 300 and the collimator lens 220 is adjusted so that the outgoing laser beam transmitted out from the collimator lens 220 become a parallel light. Further, a position of the light-emission and reception module 300 is adjusted so that an intensity distribution of the outgoing laser beam emitted from the light-emission and reception module 300 comes to correspond with the optical axis from the light-emission and reception module 300 to the collimator lens 220.

In the light-emission and reception module 300, since the frame laser including the laser-emitting element 310, the polarization beam splitter 330, and the photo-detecting element 360 are integrally mounted on the holder 390, it is unnecessary to axis-adjust the optical axis from the laser-emitting element 310 to the polarization beam splitter 330 and the optical axis from the polarization beam splitter 330 to the photo-detecting element 360. That is, even if the forward optical axis from the light-emission and reception module 300 via the collimator lens 220 to the rising mirror 230 and an axis regarding the objective lens driving device 100 are adjusted, it is unnecessary at all to adjust the other optical axes in the optical pickup. Thus, an assembling process of the optical pickup is facilitated.

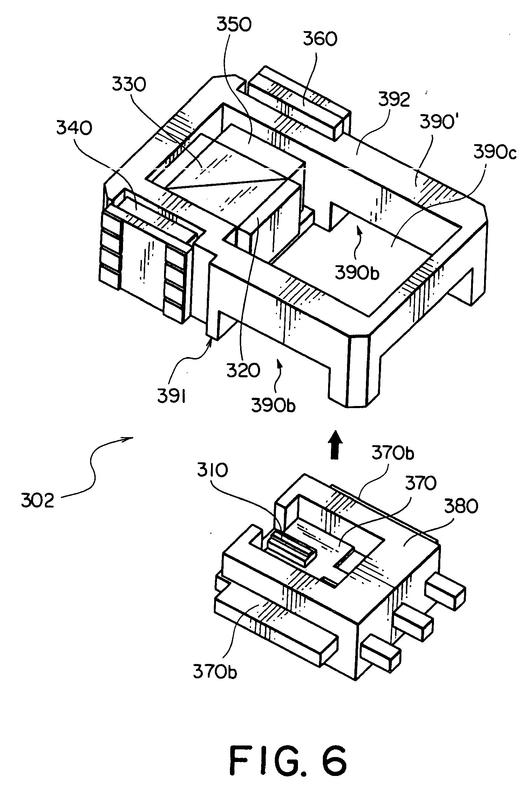

Hereinafter, although second to fourth embodiments of the present invention will be described with referring to Figs. 6 to 8, common points with the first embodiment shown in Figs. 1 to 5 will be omitted in detailed description.

### Second Embodiment

Referring to Fig. 6, a light-emission and reception module 302 according to the second embodiment of the present invention can be mounted on, optical-adjusted, and used in the optical pickup shown in Figs. 1 and 2, as like as the light-emission and reception module 300 of the first embodiment.

The light-emission and reception module 302 comprises a laser-emitting element 310 of two-wavelength handling type, a polarization beam splitter 330, a photo-detecting element 360, and an optical axis conforming element 320. The light-emission and reception module 302 further comprises a front monitor 340 and a sensor lens 350. These optical components are mounted on a holder 390'. The polarization beam splitter 330 transmits an outgoing laser beam emitted by the laser-emitting element 310 and reflects, as a reflected laser beam, a return laser beam reflected by an optical disc in a direction perpendicular to the outgoing laser beam. The photo-detecting element 360 photo-detects the reflected laser beam.

The holder 390' has a plate shape and is provided with first and second holder plate surfaces 391 and 392. The laser-emitting element 310, the polarization beam splitter 330, and the photo-detecting element 360 are mounted on the holder 390' so that the reflected laser beam is perpendicular to a reception surface of the photo-detecting element 360. Particularly, the outgoing laser beam and the reflected laser beam are parallel to the first and the second holder plate surfaces 391 and 392 of the holder 390'.

The laser-emitting element 310 is mounted on the holder 390' through a metallic frame 370 and a resin frame 380. The laser-emitting element 310 integrated with the metallic frame 370 and the resin frame 380 is the same as the frame laser of the first embodiment having the standardized size and shape.

The holder 390' has suitable size and shape for the frame laser. That is, the holder 390' has a space 390c containing the frame laser structured by laser-emitting element 310, the metallic frame 370, and the resin frame 380 and a pair of dents 390b containing a pair of end portions 370b of the metallic frame 370. The frame laser is press-fitted into the holder 390' in a direction shown by an arrow in Fig. 6 and is fixed at the predetermined position. The frame laser may be inserted into and fixed by adhesive on the holder 390'.

### Third Embodiment

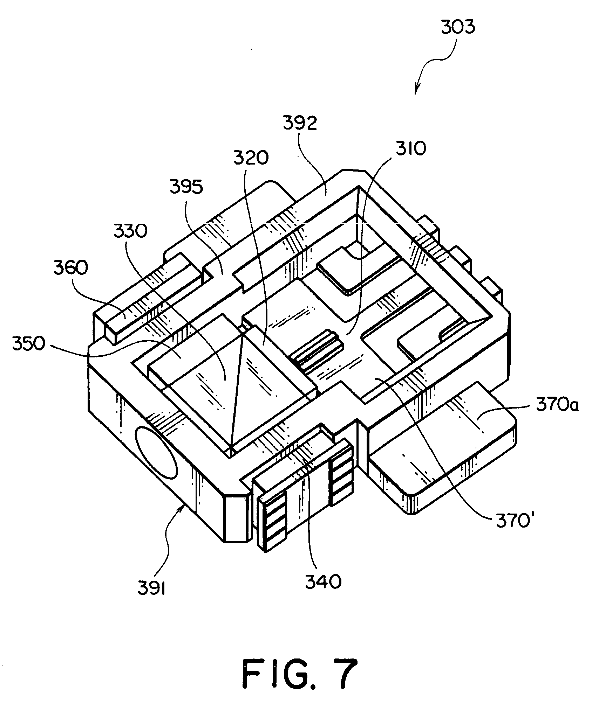

Referring to Fig. 7, a light-emission and reception module 303 according to the third embodiment of the present invention can be also mounted on, optical-adjusted, and used in the optical pickup shown in Figs. 1 and 2, as like as the light-emission and reception module 300 of the first embodiment.

The light-emission and reception module 303 comprises a laser-emitting element 310 of two-wavelength handling type, a polarization beam splitter 330, a photo-detecting element 360, and an optical axis conforming element 320. The light-emission and reception module 303 further comprises a front monitor 340 and a sensor lens 350. These optical components are mounted on a holder 395. The polarization beam splitter 330 transmits an outgoing laser beam emitted by the laser-emitting element 310 and reflects, as a reflected laser beam, a return laser beam reflected by an optical disc in a direction perpendicular to the outgoing laser beam. The photo-detecting element 360 photo-detects the reflected laser beam.

The holder 395 has a plate shape and is provided with first and second holder plate surfaces 391 and 392. The laser-emitting element 310, the polarization beam splitter 330, and the photo-detecting element 360 are mounted on the holder 395 so that the reflected laser beam is perpendicular to a reception surface of the photo-detecting element 360. Particularly, the outgoing laser beam and the reflected laser beam are parallel to the first and the second holder plate surfaces 391 and 392 of the holder 395.

In the third embodiment, which is different from the first and the second embodiments, the light-emission and reception module 303 has no resin frame and uses no frame laser. The laser-emitting element 310 is mounted on the holder 395 through only a metallic frame 370'.

The metallic frame 370' mounting thereon the laser-emitting element 310 is press-fitted into the holder 395 and is fixed at the predetermined position. The metallic frame 370' may be inserted into and fixed by adhesive on the holder 395. Alternatively, the metallic frame 370' may be integrated into the holder 395 by insert molding.

When the metallic frame 370' is mounted on the holder 395, a pair of extended end portions 370a of the metallic frame 370' are exposed from the holder 395. Consequently, the laser-emitting element 310 which becomes feverish during operations is effectively cooled by heat radiation through the end portions 370a.

### Fourth Embodiment

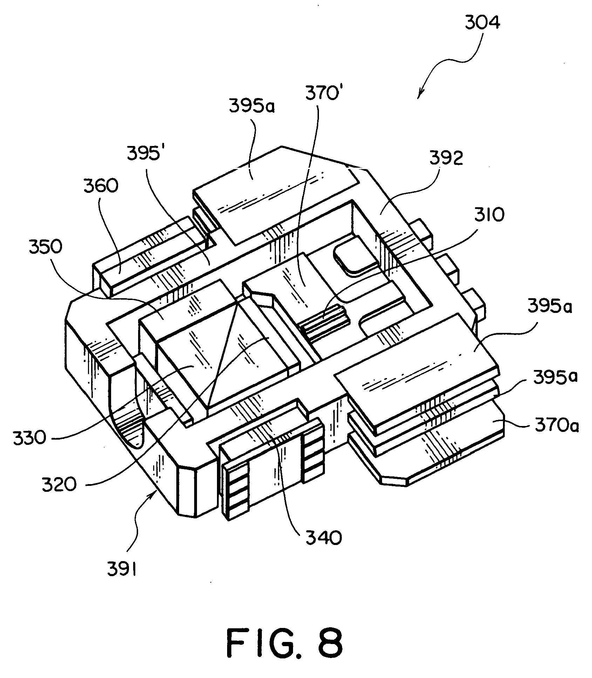

Referring to Fig. 8, a light-emission and reception module 304 according to the fourth embodiment of the present invention can be also mounted on, optical-adjusted, and used in the optical pickup shown in Figs. 1 and 2, as like as the light-emission and reception module 300 of the first embodiment.

The light-emission and reception module 304 comprises a laser-emitting element 310 of two-wavelength handling type, a polarization beam splitter 330, a photo-detecting element 360, and an optical axis conforming element 320. The light-emission and reception module 304 further comprises a front monitor 340 and a sensor lens 350. These optical components are mounted on a holder 395'. The polarization beam splitter 330 transmits an outgoing laser beam emitted by the laser-emitting element 310 and reflects, as a reflected laser beam, a return laser beam reflected by an optical disc in a direction perpendicular to the outgoing laser beam. The photo-detecting element 360 photo-detects the reflected laser beam.

The holder 395' has a plate shape and is provided with first and second holder plate surfaces 391 and 392. The laser-emitting element 310, the polarization beam splitter 330, and the photo-detecting element 360 are mounted on the holder 395' so that the reflected laser beam is perpendicular to a reception surface of the photo-detecting element 360. Particularly, the outgoing laser beam and the reflected laser beam are parallel to the first and the second holder plate surfaces 391 and 392 of the holder 395'.

In the fourth embodiment, the light-emission and reception module 304 has no resin frame and uses no frame laser, as like as the third embodiment. The laser-emitting element 310 is mounted on the holder 395 through only a metallic frame 370'.

The metallic frame 370' mounting thereon the laser-emitting element 310 is press-fitted into the holder 395' and is fixed at the predetermined position. The metallic frame 370' may be inserted into and fixed by adhesive on the holder 395'. Alternatively, the metallic frame 370' may be integrated into the holder 395' by insert molding.

As like as the third embodiment, a pair of extended end portions 370a of the metallic frame 370' are exposed from the holder 395' when the metallic frame 370' is mounted on the holder 395'. Furthermore, the holder 395' is provided with four heat-radiating fins 395a. The heat-radiating fins 395a are heat-conductively connected to the metallic frame 370' mounted on the holder 395' and are exposed from the holder 395'. The heat-radiating fins 395a are integrated into the holder 395' by insert molding. The heat-radiating fins 395a may be press-fitted into the holder 395' and is fixed at the predetermined position. Alternatively, the heat-radiating fins 395a may be inserted into and fixed by heat-conductive adhesive on the holder 395'. Consequently, the laser-emitting element 310 which becomes feverish during operations is more effectively cooled by heat radiation through the end portions 370a and the heat-radiating fins 395a.

While the present invention has thus far been described in conjunction with preferred embodiments thereof, it will now be readily possible for those skilled in the art to put the present invention into various other manners without departing from the scope of the present invention. For example, the optical pickup according to the present invention may be best suitable to optical disc drives, particularly, to thin-type optical disc drives and may be applicable to all of optical disc drives for reading recorded information or for writing information from/to optical discs (CD, CD-ROM, CD-R/RW, DVD-ROM, DVD-RAM, DVD±R/±R DL/±RW, Blu-lay, HD DVD, or the like). Needless to say, the present invention is not restricted to the two-wavelength handling optical pickups, the present invention may be applicable to one-wavelength handling optical pickups.

## Claims

1. A light-emission and reception module for use in an optical pickup, said light-emission and reception module comprising a laser-emitting element (310) for emitting an outgoing laser beam to irradiate an optical disc with the outgoing laser beam; a polarization beam splitter (330) for transmitting the outgoing laser beam and for reflecting, as a reflected laser beam, a return laser beam reflected by that optical disc; a photo-detecting element (360) for photo-detecting the reflected laser beam; and a holder (390) for mounting thereon said laser-emitting element (310), said polarization beam splitter (330), and said photo-detecting element (360); **characterized in that**:
said laser-emitting element (310), said polarization beam splitter (330), and said photo-detecting element (360) are mounted on said holder so that the reflected laser beam is perpendicular to a reception surface of said photo-detecting element (360).

2. A light-emission and reception module as claimed in claim 1, wherein said polarization beam splitter (330) reflects, as the reflected laser beam, the return laser beam in a direction perpendicular to the outgoing laser beam;
said holder (390) having a plate shape provided with first and second plate surfaces (391, 392) opposed to each other;
said laser-emitting element (310), said polarization beam splitter (330), and said photo-detecting element (360) being mounted on said holder (390) so that the outgoing laser beam and the reflected laser beam are parallel to said first and said second plate surfaces (391, 392) of said holder (390).

3. A light-emission and reception module as claimed in claim 1, further comprising a metallic frame (370) through which said laser-emitting element (310) is mounted on said holder (390).

4. A light-emission and reception module as claimed in claim 3, further comprising a resin frame (380) made of resin on which said metallic frame (370) is mounted so that said laser-emitting element (310) is mounted on said holder (390) through said metallic frame and said resin frame.

5. A light-emission and reception module as claimed in claim 4, wherein said holder (390, 390') has a space (390c) in which said resin frame (380) is received and a pair of slits or dents (390a, 390b) in which a pair of end portions (370a) of said metallic frame (370) is inserted.

6. A light-emission and reception module as claimed in claim 5, wherein said end portions (370a) of said metallic frame (370') are exposed from said holder.

7. A light-emission and reception module as claimed in any one of claims 3 to 6, wherein said holder (395') is provided with a heat-radiating fin (395a) which is heat-conductively connected to said metallic frame (370') mounted on said holder (395'), said heat-radiating fin being exposed from said holder.

8. A light-emission and reception module as claimed in any one of claims 1 to 7, wherein said laser-emitting element (310) is a two-wavelength handling type, said laser-emitting element being capable of emitting, as the outgoing laser beam, first and second laser beams from first and second emission points which are different in location from each other, the first and the second laser beams having first and second wavelengths different from each other;
said light-emission and reception module further comprising an optical axis conforming element (320), disposed between said laser-emitting element and the polarization beam splitter, for conforming each optical axis of the first and the second laser beams with each other, said optical axis conforming element (320) being mounted on said holder (390).

9. A light-emission and reception module as claimed in any one of claims 1 to 8, wherein said polarization beam splitter (330) reflects, as a partially reflected laser beam, a part of the outgoing laser beam so that the partially reflected laser beam is transmitted to a counter side of said photo-detecting element (360);
said light-emission and reception module further comprising a front monitor (340) for monitoring the intensity of the partially reflected laser beam, said front monitor being mounted on said holder (390).

10. A light-emission and reception module as claimed in any one of claims 2 to 9, wherein said laser-emitting element (31), said polarization beam splitter (330), and said photo-detecting element (360) are disposed between said first and said second plate surfaces (391, 392) of said holder (390).

11. A light-emission and reception module as claimed in any one of claims 8 to 10, wherein said optical axis conforming element (320) is disposed between said first and said second plate surfaces (391, 392) of said holder (390).

12. A light-emission and reception module as claimed in any one of claims 9 to 11, wherein said front monitor (340) is disposed between said first and said second plate surfaces (391, 392) of said holder (390).

13. An optical pickup comprising a light-emission and reception module (300) and an optical base (210);
said light-emission and reception module (300) comprising:
a laser-emitting element (310) for emitting an outgoing laser beam to irradiate an optical disc with the outgoing laser beam;
a polarization beam splitter (330) for transmitting the outgoing laser beam and for reflecting, as a reflected laser beam, a return laser beam reflected by the optical disc;
a photo-detecting element (360) for photo-detecting the reflected laser beam; and
a holder (390) for mounting thereon said laser-emitting element (310), said polarization beam splitter (330), and said photo-detecting element (360);
**characterized in that** said laser-emitting element (310), said polarization beam splitter (330), and said photo-detecting element (360) are mounted on said holder so that the reflected laser beam is perpendicular to a reception surface of said photo-detecting element (360);
said light-emission and reception module (300) being mounted on said optical base (210) so that an optical axis of the return laser beam is coincided with an incident optical axis of said polarization beam splitter (330).

14. An optical pickup as claimed in claim 13, wherein said polarization beam splitter (330) reflects, as the reflected laser beam, the return laser beam in a direction perpendicular to the outgoing laser beam;
said optical base (210) having a plate shape provided with first and second base plate surfaces (211, 212) opposed to each other;
said holder (390) having a plate shape provided with first and second holder plate surfaces (391, 392) opposed to each other;
said laser-emitting element (310), said polarization beam splitter (330), and said photo-detecting element (360) being mounted on said holder (390) so that the outgoing laser beam and the reflected laser beam are parallel to said first and said second holder plate surfaces (391, 392) of said holder (390);
said light-emission and reception module being mounted on said optical base (210) so that said first and said second holder plate surfaces (391, 392) are parallel to said first and said second base plate surfaces (211, 212).

15. An optical pickup as claimed in claim 13, wherein said optical pickup further comprises an objective lens (2) and a rising mirror (230),
said objective lens focusing, as a focused laser beam, the outgoing laser beam on the optical disc and for transmitting the return laser beam,
said rising mirror being disposed between said light-emission and reception module (300) and said objective lens (2) and polarizing an incoming laser beam by 90 degrees;
said objective lens (2) and said rising mirror (230) being mounted on said optical base (210) so that the focused laser beam is perpendicular to said first and said second base plate surfaces (211, 212).

16. An optical pickup as claimed in any one of claims 13 to 15, wherein said laser-emission and reception module (300) is disposed between said first and said second base plate surfaces (211, 212).

17. An optical pickup as claimed in claim 15 or 16, wherein said objective lens (2) and said rising mirror (230) are disposed between said first and said second base plate surfaces (211, 212).
